# FASCICULE DE BREVET EUROPEEN

(11) **EP 4 014 808 B1**
(45) Date de publication et mention de la délivrance du brevet: **03.01.2024**
(21) Numéro de dépôt: 21213860.6
(22) Date de dépôt: 10.12.2021
(51) Int. Cl.: A47J 37/07

(54) **APPAREIL DE CUISSON ÉLECTRIQUE POUR LA CUISSON DE PRODUITS ALIMENTAIRES**
ELEKTRISCHES KOCHGERÄT FÜR DAS KOCHEN VON LEBENSMITTELPRODUKTEN
ELECTRICAL COOKING APPLIANCE FOR COOKING FOOD PRODUCTS

(30) Priorité: 17.12.2020 FR 2013564
(43) Date de publication de la demande: 22.06.2022
(73) Titulaire: SEB S.A., 69130 Ecully (FR)
(72) Inventeur: FORNECKER, Florent, 69620 VAL D'OINGT (FR); DOS SANTOS, Quentin, 69009 LYON (FR)
(74) Mandataire: SEB Développement

(56) Documents cités:
- WO-A1-2018/087486
- US-A1- 2011 062 151
- US-A1- 2015 122 135
- US-A1- 2016 100 462

## Description

### Domaine technique

La présente invention concerne de manière générale un appareil de cuisson électrique pour la cuisson de produits alimentaires, et en particulier un barbecue électrique.

### Etat de la technique

Le document WO2018/087486 divulgue un appareil de cuisson, de type gril électrique, comprenant :
- une partie inférieure comportant une plaque de cuisson inférieure,
- une partie supérieure comportant une plaque de cuisson supérieure,
- un élément d'articulation reliant la partie supérieure à la partie inférieure et configuré de telle sorte que la partie supérieure est montée articulée par rapport à la partie inferieure pour définir au moins une position de chargement dans laquelle un aliment peut être placé entre la plaque de cuisson inférieure et la plaque de cuisson supérieure et au moins une position de cuisson dans laquelle l'aliment est enserré entre la plaque de cuisson inférieure et la plaque de cuisson supérieure,
- un dispositif de mesure configuré pour déterminer un écartement entre la plaque de cuisson inférieure et la plaque de cuisson supérieure, et donc pour déterminer l'épaisseur de l'aliment disposé entre les plaques de cuisson inférieure et supérieure, et
- une unité de gestion de cuisson configurée pour gérer la cuisson de l'aliment en fonction de l'écartement déterminé par le dispositif de mesure.

Une telle configuration de l'appareil de cuisson précité permet de déterminer automatiquement le temps de cuisson d'un aliment disposé sur la plaque de cuisson inférieure en fonction de l'épaisseur de l'aliment, et donc d'assurer une cuisson satisfaisante de cet aliment.

Cependant, une telle configuration de l'appareil de cuisson précité n'est pas transposable à un appareil de cuisson comprenant une enceinte de cuisson fermée, tel qu'un barbecue électrique muni d'un couvercle. Or, un appareil de cuisson pourvu d'une enceinte de cuisson fermée permet de minimiser les pertes énergétiques et donc de réduire le temps de cuisson d'un aliment, et également de bénéficier d'un effet « chaleur tournante » et donc de rendre les aliments plus tendres.

Le document US2016/100432A1 montre un appareil de cuisson électrique comprenant les caractéristiques du préambule de la revendication 1.

### Résumé de l'invention

La présente invention vise à remédier à tout ou partie de ces inconvénients.

Le problème technique à la base de l'invention consiste notamment à fournir un appareil de cuisson électrique pour la cuisson de produits alimentaires qui soit de structure simple, économique et fiable, qui garantisse une cuisson satisfaisante et rapide des produits alimentaires, tout en garantissant une cuisson permettant l'obtention de produits alimentaires tendres.

A cet effet, la présente invention concerne un appareil de cuisson électrique pour la cuisson de produits alimentaires, comportant :
- une embase comprenant une plaque de cuisson configurée pour cuire un aliment,
- un couvercle monté articulé sur l'embase entre une position ouverte dans laquelle un aliment peut être disposé sur la plaque de cuisson et une position fermée dans laquelle l'embase et le couvercle délimitent une enceinte de cuisson fermée,
- un élément d'appui qui est porté par le couvercle et qui est monté mobile par rapport au couvercle, l'élément d'appui étant configuré pour occuper une position de repos dans laquelle, lorsque le couvercle occupe la position fermée, l'élément d'appui est situé en regard et à proximité de la plaque de cuisson et au moins une position d'appui dans laquelle, lorsque le couvercle occupe la position fermée, l'élément d'appui est situé en regard et à distance de la plaque de cuisson et prend appui sur un aliment placé sur la plaque de cuisson, l'élément d'appui étant configuré pour venir en contact avec un aliment placé sur la plaque de cuisson lorsque le couvercle est déplacé de la position ouverte à une position intermédiaire située entre la position ouverte et la position fermée et étant configuré pour être déplacé par ledit aliment de la position de repos à une position d'appui lorsque le couvercle est déplacé de la position intermédiaire à la position fermée, et
- un dispositif de mesure configuré pour déterminer une caractéristique représentative de l'épaisseur d'un aliment disposé entre la plaque de cuisson et l'élément d'appui.

Une telle configuration de l'appareil de cuisson électrique selon la présente invention permet de déterminer automatiquement l'épaisseur de l'aliment disposé sur la plaque de cuisson en fonction de la position d'appui occupée par l'élément d'appui, et ensuite de déterminer automatiquement le temps de cuisson dudit aliment.

Etant donné que l'élément d'appui est monté mobile par rapport au couvercle et est configuré pour être situé en regard de la plaque de cuisson, l'appareil de cuisson électrique selon la présente invention permet de cuire un aliment disposé sur la plaque de cuisson alors que le couvercle occupe une position fermée dans laquelle le couvercle définit, avec l'embase, une enceinte de cuisson fermée.

Ainsi, l'appareil de cuisson électrique selon la présente invention garantit une détermination automatique de l'épaisseur d'un aliment combinée à une cuisson de l'aliment dans une enceinte de cuisson fermée, ce qui assure une cuisson optimale, rapide d'un aliment disposé sur la plaque de cuisson.

De plus, le fait que l'élément d'appui soit configuré pour être déplacé de la position de repos vers une position d'appui directement par l'aliment permet de simplifier la structure de l'appareil de cuisson électrique selon la présente invention, et donc d'en réduire les coûts de fabrication.

L'appareil de cuisson électrique peut en outre présenter une ou plusieurs des caractéristiques suivantes, prises seules ou en combinaison.

Selon un mode de réalisation de l'invention, le couvercle est monté articulé sur l'embase par l'intermédiaire d'une liaison pivot qui est située sur une partie arrière de l'appareil de cuisson électrique et définit un axe de pivotement. De façon avantageuse, l'axe de pivotement est sensiblement horizontal lorsque l'embase repose sur un support plan horizontal.

Selon un mode de réalisation de l'invention, l'appareil de cuisson électrique comprend en outre une unité de contrôle configurée pour déterminer l'état de cuisson d'un aliment disposé sur la plaque de cuisson en tenant compte, entre autres, de la caractéristique déterminée par le dispositif de mesure.

Selon un mode de réalisation de l'invention, l'unité de contrôle est configurée pour informer l'utilisateur d'au moins un état de cuisson de l'aliment disposé sur la plaque de cuisson.

Selon un mode de réalisation de l'invention, la caractéristique déterminée par le dispositif de mesure est la distance de déplacement parcourue par l'élément d'appui entre la position de repos et la position d'appui ou est l'écartement entre la plaque de cuisson et l'élément d'appui.

Selon un mode de réalisation de l'invention, l'élément d'appui est configuré pour être en contact avec la plaque de cuisson lorsque le couvercle occupe la position fermée et que l'élément d'appui occupe la position de repos. Dans un tel cas, la distance de déplacement parcourue par l'élément d'appui entre la position de repos et la position d'appui correspond à l'écartement entre la plaque de cuisson et l'élément d'appui.

Selon un mode de réalisation de l'invention, l'élément d'appui est une plaque d'appui.

Selon un mode de réalisation de l'invention, la plaque d'appui est configurée pour s'étendre sensiblement parallèlement à la plaque de cuisson lorsque le couvercle occupe la position fermée.

Selon un mode de réalisation de l'invention, la plaque d'appui comporte une pluralité de perforations.

Selon un mode de réalisation de l'invention, l'appareil de cuisson électrique comprend un dispositif de chauffage inférieur prévu dans l'embase et configuré pour chauffer la plaque de cuisson.

Selon un mode de réalisation de l'invention, le dispositif de chauffage inférieur est disposé sous la plaque de cuisson.

Selon un mode de réalisation de l'invention, le dispositif de chauffage inférieur comporte un élément résistif chauffant.

Selon un mode de réalisation de l'invention, l'embase comporte une cuve inférieure, par exemple métallique, configurée pour récupérer les jus de cuisson.

Selon un mode de réalisation de l'invention, le dispositif de chauffage inférieur est disposé dans la cuve inférieure.

Selon un mode de réalisation de l'invention, la plaque de cuisson est disposée en regard d'une ouverture supérieure de la cuve inférieure.

Selon un mode de réalisation de l'invention, l'appareil de cuisson électrique comporte un élément d'actionnement qui est configuré pour coopérer avec le dispositif de mesure et qui est mobile entre une première position d'actionnement et une deuxième position d'actionnement, l'élément d'actionnement étant configuré pour occuper la première position d'actionnement lorsque l'élément d'appui occupe la position de repos, l'appareil de cuisson électrique étant configuré de telle sorte qu'un déplacement de l'élément d'appui entre la position de repos et une position d'appui entraîne un déplacement de l'élément d'actionnement entre la première position d'actionnement et la deuxième position d'actionnement, le dispositif de mesure étant configuré pour déterminer la caractéristique représentative de l'épaisseur d'un aliment disposé entre la plaque de cuisson et l'élément d'appui en fonction de la position occupée par l'élément d'actionnement entre la première position d'actionnement et la deuxième position d'actionnement.

Selon un mode de réalisation de l'invention, l'élément d'actionnement est disposé dans une partie avant de l'appareil de cuisson électrique, et/ou le dispositif de mesure est disposé dans une partie avant de l'appareil de cuisson électrique.

Selon un mode de réalisation de l'invention, l'élément d'actionnement est disposé dans une partie avant du couvercle.

Selon un autre mode de réalisation de l'invention, le dispositif de mesure est disposé dans une partie arrière de l'appareil de cuisson électrique, et par exemple dans une partie arrière du couvercle.

Selon un mode de réalisation de l'invention, le dispositif de mesure comporte une partie fixe qui est montée fixe par rapport à l'embase ou au couvercle, et une partie mobile qui est montée mobile par rapport à la partie fixe entre une première position de mesure et une deuxième position de mesure, l'élément d'actionnement étant configuré pour coopérer avec la partie mobile et pour la déplacer entre la première position de mesure et la deuxième position de mesure lorsque l'élément d'actionnement est déplacé entre la première position d'actionnement et la deuxième position d'actionnement.

Selon un mode de réalisation de l'invention, la partie mobile comporte un organe de coopération, tel qu'un doigt de coopération, l'élément d'actionnement étant configuré pour coopérer avec l'organe de coopération.

Selon un mode de réalisation de l'invention, l'organe de coopération est configuré pour reposer sur l'élément d'actionnement.

Selon un mode de réalisation de l'invention, la partie mobile est montée mobile selon une direction de déplacement, par exemple rectiligne. De façon avantageuse, la direction de déplacement est sensiblement verticale lorsque l'embase repose sur un support horizontal et que le couvercle occupe la position fermée.

Selon un mode de réalisation de l'invention, la partie mobile est montée coulissante sur le couvercle selon la direction de déplacement.

Selon un mode de réalisation de l'invention, le couvercle comporte un organe de guidage configuré pour guider la partie mobile selon la direction de déplacement. De façon avantageuse, la partie mobile est montée coulissante dans l'organe de guidage.

Selon un mode de réalisation de l'invention, le dispositif de mesure comporte un dispositif de détection électromagnétique, notamment à effet Hall.

Selon un mode de réalisation de l'invention, le dispositif de détection électromagnétique comporte un capteur à effet Hall fixé à l'embase et un aimant, tel qu'un aimant permanent, monté mobile sur le couvercle. De façon avantageuse, la partie fixe précitée comporte le capteur à effet Hall et la partie mobile précitée comporte l'aimant.

Selon un autre mode de réalisation de l'invention, le dispositif de mesure comporte un potentiomètre.

Selon un mode de réalisation de l'invention, l'appareil de cuisson électrique comporte un dispositif de liaison configuré pour relier l'élément d'appui au couvercle, le dispositif de liaison comportant une partie de fixation qui est fixée au couvercle et un organe de liaison qui comprend une première portion de montage qui est montée articulée sur la partie de fixation autour d'un premier axe d'articulation et une deuxième portion de montage qui est montée articulée sur l'élément d'appui autour d'un deuxième axe d'articulation qui est sensiblement parallèle au premier axe d'articulation.

Selon un mode de réalisation de l'invention, le premier axe d'articulation est sensiblement parallèle à l'axe de pivotement du couvercle.

Selon un mode de réalisation de l'invention, la partie de fixation est fixée à une partie avant du couvercle.

Selon un mode de réalisation de l'invention, la partie de fixation est distincte du couvercle et est rapportée sur le couvercle

Selon un autre mode de réalisation de l'invention, la partie de fixation et le couvercle sont réalisés en une seule pièce.

Selon un mode de réalisation de l'invention, le premier axe d'articulation est sensiblement horizontal lorsque l'embase repose sur un support horizontal.

Selon un mode de réalisation de l'invention, le dispositif de liaison est configuré pour maintenir l'élément d'appui sensiblement horizontal lors des déplacements de l'élément d'appui entre la position de repos et la position d'appui.

Selon un mode de réalisation de l'invention, l'élément d'actionnement est fixé à l'organe de liaison.

Selon un mode de réalisation de l'invention, l'élément d'actionnement comporte un levier d'actionnement ou une patte d'actionnement fixé(e) à l'organe de liaison.

Selon un mode de réalisation de l'invention, le dispositif de liaison et l'élément d'appui définissent un quadrilatère déformable, et plus particulièrement un parallélogramme déformable.

Selon un mode de réalisation de l'invention, le quadrilatère déformable est déformable entre une configuration de repos dans laquelle l'élément d'appui est dans la position de repos et une configuration déformée dans laquelle l'élément d'appui est dans la position d'appui.

Selon un mode de réalisation de l'invention, le dispositif de liaison comporte un organe de liaison additionnel qui comprend une première portion de liaison qui est montée articulée sur la partie de fixation autour d'un troisième axe d'articulation et une deuxième portion de liaison qui est montée articulée sur l'élément d'appui autour d'un quatrième axe d'articulation qui est sensiblement parallèle au premier axe d'articulation et au troisième axe d'articulation, l'organe de liaison, l'organe de liaison additionnel, l'élément d'appui et la partie de fixation définissant le quadrilatère déformable, et plus particulièrement le parallélogramme déformable, qui est articulé au niveau des premier, deuxième, troisième et quatrième axes d'articulation.

Selon un mode de réalisation de l'invention, l'appareil de cuisson électrique comporte un élément de sollicitation configuré pour solliciter l'élément d'appui vers la position de repos.

Selon un mode de réalisation de l'invention, la plaque de cuisson comporte une pluralité de perforations.

Selon un mode de réalisation de l'invention, le couvercle est configuré pour reposer sur l'embase lorsque le couvercle occupe la position fermée.

Selon un mode de réalisation de l'invention, l'élément d'actionnement est monté pivotant autour d'un axe de pivotement, l'appareil de cuisson électrique étant configuré de telle sorte qu'un déplacement de l'élément d'appui entre la position de repos et la position d'appui entraîne un pivotement de l'élément d'actionnement autour de l'axe de pivotement de l'élément d'actionnement.

Selon un mode de réalisation de l'invention, le dispositif de mesure est configuré pour mesurer l'angle de pivotement de l'élément d'actionnement et pour déterminer la caractéristique représentative de l'épaisseur d'un aliment disposé entre la plaque de cuisson et l'élément d'appui, à partir de l'angle de pivotement mesuré.

Selon un mode de réalisation de l'invention, l'appareil de cuisson électrique comporte une interface de commande prévue sur une partie avant de l'appareil de cuisson électrique, et par exemple sur une partie avant de l'embase.

Selon un mode de réalisation de l'invention, l'appareil de cuisson électrique est un barbecue électrique.

### Brève description des figures

L'invention sera bien comprise à l'aide de la description qui suit en référence aux dessins schématiques annexés représentant, à titre d'exemple non limitatif, une forme d'exécution de cet appareil de cuisson électrique.
[Fig. 1] La figure 1 est une vue en perspective d'un appareil de cuisson électrique selon la présente invention, montrant un couvercle de l'appareil de cuisson électrique en position fermée.
[Fig. 2] La figure 2 est une vue en perspective de l'appareil de cuisson électrique de la figure 1, montrant le couvercle en position ouverte.
[Fig. 3] La figure 3 est une vue en coupe de l'appareil de cuisson électrique de la figure 1, montrant le couvercle en position ouverte.
[Fig. 4] La figure 4 est une vue en coupe de l'appareil de cuisson électrique de la figure 1, montrant le couvercle en position fermée.
[Fig. 5] La figure 5 est une vue en coupe de l'appareil de cuisson électrique de la figure 1, montrant le couvercle en position fermée et un aliment disposé sur une plaque de cuisson de l'appareil de cuisson électrique.
[Fig. 6] La figure 6 est une vue en perspective d'un dispositif de liaison et d'un élément d'appui appartenant à l'appareil de cuisson électrique de la figure 1.
[Fig. 7] La figure 7 est une vue en perspective du dispositif de liaison et de l'élément d'appui de la figure 6.

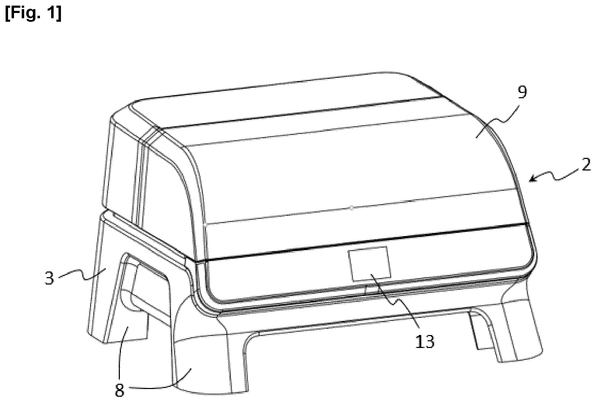

Les figures 1 à 7 représentent un appareil de cuisson électrique 2, tel qu'un barbecue électrique, pour la cuisson de produits alimentaires, tels que notamment de la viande, du poisson ou des légumes. L'appareil de cuisson électrique 2 est plus particulièrement configuré pour reposer sur un support plan, tel qu'une table ou un plan de travail, ou sur un piètement.

L'appareil de cuisson électrique 2 comporte une embase 3 qui comprend un châssis inférieur 4, une cuve inférieure 5, par exemple métallique, montée sur le châssis inférieur 4 et configurée pour récupérer des jus de cuisson, une plaque de cuisson 6 montée sur la cuve inférieure 5 et disposée en regard d'une ouverture supérieure de la cuve inférieure 5, et un dispositif de chauffage inférieur 7 configuré pour chauffer la plaque de cuisson 6. Le dispositif de chauffage inférieur 7 peut par exemple comporter un élément résistif chauffant, et être disposé dans la cuve inférieure 5 et sous la plaque de cuisson 6.

La plaque de cuisson 6 peut par exemple être monobloc, ou être formée, comme montré sur les figures, par plusieurs éléments de plaque disposés les uns à côté des autres.

De façon avantageuse, le châssis inférieur 4 comporte des pieds 8 afin de permettre un positionnement optimal de l'appareil de cuisson électrique 2 sur un support plan, et la plaque de cuisson 6 comporte une pluralité de perforations afin de permettre l'écoulement des jus de cuisson dans la cuve inférieure 5.

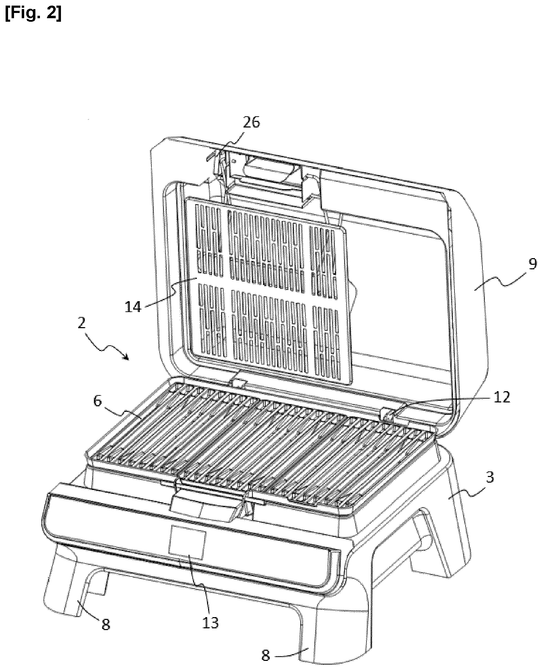

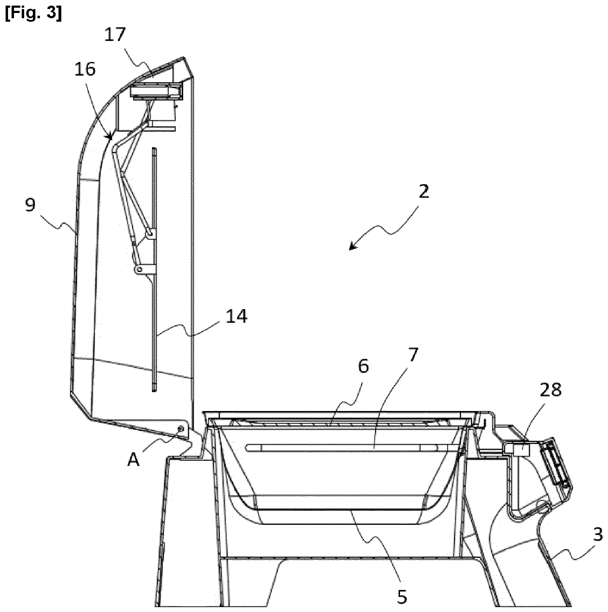

L'appareil de cuisson électrique 2 comporte de plus un couvercle 9 monté articulé sur l'embase 3 entre une position ouverte (voir les figures 2 et 3) dans laquelle un aliment à cuire peut être disposé sur la plaque de cuisson 6 et une position fermée (voir les figures 1, 4 et 5) dans laquelle l'embase 3 et le couvercle 9 délimitent une enceinte de cuisson fermée 11. De façon avantageuse, le couvercle 9 est configuré pour reposer sur l'embase 3 lorsque le couvercle 9 occupe la position fermée.

Selon le mode de réalisation représenté sur les figures, le couvercle 9 est monté pivotant sur l'embase 3 par l'intermédiaire d'une charnière 12 située à l'arrière de l'appareil de cuisson électrique 2. De façon avantageuse, la charnière 12 définit un axe de pivotement A qui est sensiblement horizontal lorsque l'embase 3 repose sur un support plan.

L'appareil de cuisson électrique 2 comporte également une interface de commande 13, également nommée interface homme machine, prévue sur une partie avant de l'appareil de cuisson électrique 2, et par exemple sur une partie avant de l'embase 3. De façon avantageuse, l'interface de commande 13 comporte un afficheur et des boutons de commande pour permettre à un utilisateur de démarrer/arrêter l'appareil de cuisson électrique 2 et de sélectionner ses choix de cuisson (type de cuisson, niveau de cuisson souhaité, etc..).

L'appareil de cuisson électrique 2 comporte en outre un élément d'appui 14, tel qu'une plaque d'appui, qui est porté par le couvercle 9 et qui est monté mobile par rapport au couvercle 9. L'élément d'appui 14 est plus particulièrement configuré pour prendre appui sur un aliment 15 disposé sur la plaque de cuisson 6 lorsque le couvercle 9 occupe la position fermée.

Selon le mode de réalisation représenté sur les figures, l'élément d'appui 14 comporte une pluralité de perforations, et est configuré pour s'étendre sensiblement parallèlement à la plaque de cuisson 6 lorsque le couvercle 9 occupe la position fermée. L'élément d'appui 14 peut par exemple présenter une largeur sensiblement identique à celle de la plaque de cuisson 6, ou, comme montré sur les figures, une largeur inférieure à celle de la plaque de cuisson 6.

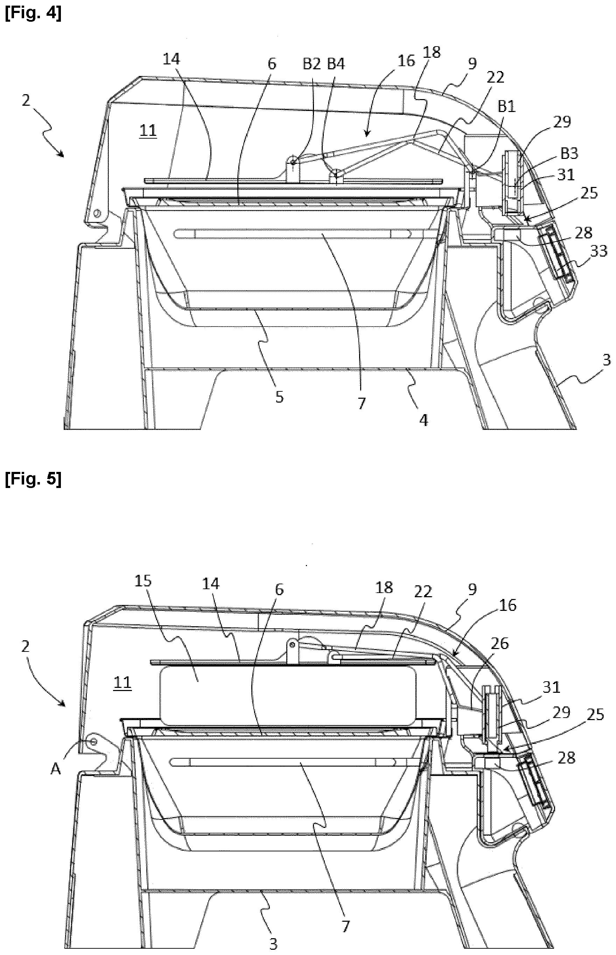

L'élément d'appui 14 est configuré pour occuper une position de repos (voir la figure 4) dans laquelle, lorsque le couvercle 9 occupe la position fermée, l'élément d'appui 14 est situé en regard et à proximité de la plaque de cuisson 6 (et par exemple au contact de la plaque de cuisson 6) et une pluralité de positions d'appui (voir la figure 5) dans chacune desquelles, lorsque le couvercle 9 occupe la position fermée, l'élément d'appui 14 est situé en regard et à distance de la plaque de cuisson 6 et prend appui sur un aliment 15 placé sur la plaque de cuisson 6. La position d'appui occupée par l'élément d'appui 14 dépend de l'épaisseur de l'aliment 15 disposé sur la plaque de cuisson 6.

De façon avantageuse, l'élément d'appui 14 est configuré pour venir en contact avec un aliment 15 placé sur la plaque de cuisson 6 lorsque le couvercle 9 est déplacé de la position ouverte à une position intermédiaire située entre la position ouverte et la position fermée, et est configuré pour être déplacé par ledit aliment 15 de la position de repos à une position d'appui lorsque le couvercle 9 est déplacé de la position intermédiaire à la position fermée.

Selon le mode de réalisation représenté sur les figures, l'appareil de cuisson électrique 2 comporte un dispositif de liaison 16 configuré pour relier l'élément d'appui 14 au couvercle 9. De façon avantageuse, le dispositif de liaison 16 est configuré pour maintenir l'élément d'appui 14 sensiblement horizontal lors des déplacements de l'élément d'appui 14 entre la position de repos et une position d'appui.

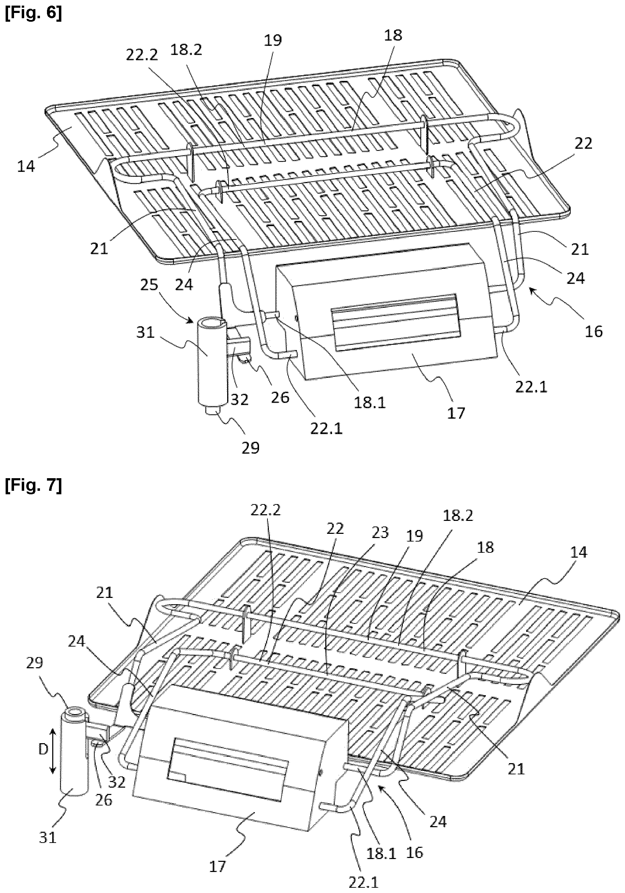

Comme montré plus particulièrement sur les figures 6 et 7, le dispositif de liaison 16 comporte une partie de fixation 17, telle qu'un boîtier de fixation, qui est fixée au couvercle 9, et plus particulièrement à une partie avant du couvercle 9. Selon le mode de réalisation représenté sur les figures, la partie de fixation 17 est distincte du couvercle 9 et est rapportée sur le couvercle 9. Toutefois, selon une variante de réalisation de l'invention, la partie de fixation 17 et le couvercle 9 pourraient être réalisés en une seule pièce.

Le dispositif de liaison 16 comporte en outre un organe de liaison 18 qui comprend une première portion de montage 18.1 qui est montée articulée sur la partie de fixation 17 autour d'un premier axe d'articulation B1 et une deuxième portion de montage 18.2 qui est montée articulée sur l'élément d'appui 14 autour d'un deuxième axe d'articulation B2 qui est sensiblement parallèle au premier axe d'articulation B1. De façon avantageuse, le premier axe d'articulation B1 est sensiblement parallèle à l'axe de pivotement A du couvercle 9, et est donc sensiblement horizontal lorsque l'embase 3 repose sur un support horizontal.

Selon le mode de réalisation représenté sur les figures, l'organe de liaison 18 présente une forme générale de U, et comporte une partie centrale allongée 19 qui s'étend parallèlement à l'axe de pivotement A, et deux bras latéraux 21 s'étendant chacun à partir d'une extrémité respective de la partie centrale allongée 19. Chaque bras latéral 21 comporte une portion d'extrémité qui est opposée à la partie centrale allongée 19 et qui est montée articulée sur un côté latéral respectif de la partie de fixation 17. Les portions d'extrémité des deux bras latéraux 21, qui sont situées à l'opposé de la partie centrale allongée 19, forment la première portion de montage 18.1, tandis que la partie centrale allongée 19 forme la deuxième portion de montage 18.2.

Le dispositif de liaison 16 comporte de plus un organe de liaison additionnel 22 qui comprend une première portion de liaison 22.1 qui est montée articulée sur la partie de fixation 17 autour d'un troisième axe d'articulation B3 et une deuxième portion de liaison 22.2 qui est montée articulée sur l'élément d'appui 14 autour d'un quatrième axe d'articulation B4 qui est sensiblement parallèle au premier axe d'articulation B1 et au troisième axe d'articulation B3.

Selon le mode de réalisation représenté sur les figures, l'organe de liaison additionnel 22 présente également une forme générale de U, et comporte une partie centrale allongée 23 qui s'étend parallèlement à l'axe de pivotement A, et deux bras latéraux 24 s'étendant chacun à partir d'une extrémité respective de la partie centrale allongée 23. Chaque bras latéral 24 comporte une portion d'extrémité qui est opposée à la partie centrale allongée 23 et qui est montée articulée sur un côté latéral respectif de la partie de fixation 17. Les portions d'extrémité des deux bras latéraux 24, qui sont situées à l'opposé de la partie centrale allongée 23, forment la première portion de liaison 22.1, tandis que la partie centrale allongée 23 forme la deuxième portion de liaison 22.2.

De façon avantageuse, l'organe de liaison 18, l'organe de liaison additionnel 22, l'élément d'appui 14 et la partie de fixation 17 définissent un quadrilatère déformable, et plus particulièrement un parallélogramme déformable, qui est articulé au niveau des premier, deuxième, troisième et quatrième axes d'articulation, et qui est déformable entre une configuration de repos dans laquelle l'élément d'appui 14 est dans la position de repos et une configuration déformée dans laquelle l'élément d'appui 14 est dans une position d'appui.

L'appareil de cuisson électrique 2 comporte de plus un élément de sollicitation (non visible sur les figures) configuré pour solliciter l'élément d'appui 14 vers la position de repos. L'élément de sollicitation peut par exemple être logé dans la partie de fixation 17. Un tel élément de sollicitation peut par exemple être un ressort.

L'appareil de cuisson électrique 2 comporte en outre un dispositif de mesure 25 configuré pour déterminer une caractéristique représentative de l'épaisseur d'un aliment 15 disposé entre la plaque de cuisson 6 et l'élément d'appui 14. La caractéristique déterminée par le dispositif de mesure 25 peut par exemple être la distance de déplacement parcourue par l'élément d'appui 14 entre la position de repos et la position d'appui ou l'écartement entre la plaque de cuisson 6 et l'élément d'appui 14.

Selon le mode de réalisation représenté sur les figures, le dispositif de mesure 25 est disposé sur une partie avant de l'appareil de cuisson électrique 2. Toutefois, le dispositif de mesure 25 pourrait également être disposé sur une partie arrière de l'appareil de cuisson électrique 2.

Selon le mode de réalisation représenté sur les figures, l'appareil de cuisson électrique 2 comporte également un élément d'actionnement 26 qui est disposé dans une partie avant du couvercle 9, et qui est monté mobile par rapport au couvercle 9 entre une première position d'actionnement (voir la figure 4) et une deuxième position d'actionnement (voir la figure 5). L'élément d'actionnement 26 est configuré pour occuper la première position d'actionnement lorsque l'élément d'appui 14 occupe la position de repos, et pour occuper la deuxième position d'actionnement lorsque l'élément d'appui 14 occupe la position d'appui dans laquelle l'élément d'appui 14 est le plus éloigné de la position de repos.

L'appareil de cuisson électrique 2 est configuré de telle sorte qu'un déplacement de l'élément d'appui 14 depuis la position de repos à une position d'appui entraîne un déplacement de l'élément d'actionnement 26 depuis la première position d'actionnement vers la deuxième position d'actionnement, et de telle sorte qu'un déplacement de l'élément d'appui 14 depuis une position d'appui à la position de repos entraîne un déplacement de l'élément d'actionnement 26 dans la deuxième position d'actionnement.

Selon le mode de réalisation représenté sur les figures, l'élément d'actionnement 26 est fixé à l'organe de liaison 18 et est situé à proximité de la partie de fixation 17. Ainsi, l'élément d'actionnement 26 est monté pivotant par rapport à la partie de fixation 17 autour du premier axe d'articulation B1. De façon avantageuse, l'élément d'actionnement 26 est un levier d'actionnement ou une patte d'actionnement.

Le dispositif de mesure 25 est plus particulièrement configuré pour coopérer avec l'élément d'actionnement 26, et pour déterminer la caractéristique représentative de l'épaisseur d'un aliment 15 disposé entre la plaque de cuisson 6 et l'élément d'appui 14 en fonction de la position occupée par l'élément d'actionnement 26 entre la première position d'actionnement et la deuxième position d'actionnement.

Comme montré notamment sur les figures 4 et 5, le dispositif de mesure 25 comporte une partie fixe 28 qui est fixée à l'embase 3, et une partie mobile 29 qui est montée mobile par rapport à la partie fixe 28 entre une première position de mesure et une deuxième position de mesure. Selon le mode de réalisation représenté sur les figures, la partie mobile 29 est éloignée de la partie fixe 28 lorsque la partie mobile 29 occupe la première position de mesure et est rapprochée de la partie fixe 28 lorsque la partie mobile 29 occupe la deuxième position de mesure. Cependant, selon une variante de réalisation de l'invention, la partie mobile 29 pourrait être rapprochée de la partie fixe 28 lorsque la partie mobile 29 occupe la première position de mesure et être éloignée de la partie fixe 28 lorsque la partie mobile 29 occupe la deuxième position de mesure.

L'élément d'actionnement 26 est configuré pour coopérer avec la partie mobile 29 du dispositif de mesure 25 et pour la déplacer entre la première position de mesure et la deuxième position de mesure lorsque l'élément d'actionnement 26 est déplacé entre la première position d'actionnement et la deuxième position d'actionnement.

Selon le mode de réalisation représenté sur les figures, la partie mobile 29 est montée coulissante sur le couvercle 9 selon une direction de déplacement D qui est rectiligne et qui est sensiblement verticale lorsque l'embase 3 repose sur un support horizontal et que le couvercle 9 occupe la position fermée. De façon avantageuse, la partie mobile 29 présente une forme globalement cylindrique, et le couvercle 9 comporte un organe de guidage 31 dans lequel est montée coulissante la partie mobile 29 et qui est configuré pour guider la partie mobile 29 selon la direction de déplacement D.

Selon le mode de réalisation représenté sur les figures, le dispositif de mesure 25 comporte un dispositif de détection électromagnétique, en particulier à effet Hall. De façon avantageuse, le dispositif de détection électromagnétique comporte un capteur à effet Hall formant au moins en partie la partie fixe 28, et un aimant formant au moins en partie la partie mobile 29.

Selon le mode de réalisation représenté sur les figures, la partie mobile 29 comporte un organe de coopération 32, tel qu'un doigt de coopération, qui est configuré pour reposer sur l'élément d'actionnement 26 et qui est configuré pour coopérer avec l'élément d'actionnement 26. De manière préférentielle, l'organe de guidage 31 renferme un ressort de rappel (non visible sur les figures) qui tend à ramener la partie mobile 29 en direction de l'élément d'actionnement 26 de manière à ce que l'organe de coopération 32 soit toujours au contact de l'élément d'actionnement 26.

L'appareil de cuisson électrique 2 comprend en outre une unité de contrôle 33 configurée pour déterminer les caractéristiques de cuisson d'un aliment 15 disposé sur la plaque de cuisson 6 en fonction de la caractéristique déterminée par le dispositif de mesure 25. L'unité de contrôle 33 est en outre configurée pour informer l'utilisateur sur un ou plusieurs états de cuisson successifs de l'aliment 15 et/ou de l'alerter sur le besoin de retourner l'aliment 15 sur la plaque de cuisson 6. Cette information à l'utilisateur pourra être réalisée, de manière connue en soi, au moyen d'un afficheur dédié disposé sur l'appareil de cuisson électrique 2, d'une alerte sonore ou par le biais d'une communication sans fil avec un appareil distant tel un téléphone.

Un procédé d'utilisation et de fonctionnement d'un tel appareil de cuisson électrique 2 va maintenant être décrit. Un tel procédé comporte les étapes suivantes :
- mise sous tension de l'appareil de cuisson électrique 2, par exemple en appuyant sur une touche ou bouton marche/arrêt de l'interface de commande 13 ;
- si cela est prévu, sélection du type d'aliment à cuire au moyen de l'interface de commande 13 ;
- si cela est encore prévu, sélection d'un degré de cuisson souhaité de l'aliment, par exemple saignant. Les températures de cuisson pourraient cependant être déterminées par l'appareil de cuisson électrique 2 en fonction du type d'aliment sélectionné ;
- si cela est encore prévu, détermination automatique de la température de préchauffage de l'appareil de cuisson électrique 2 ;
- déplacement du couvercle 9 dans la position ouverte, cette étape pouvant être réalisée à n'importe quel moment des étapes susmentionnées ;
- mise en place de l'aliment à cuire sur la plaque de cuisson 6 ;
- déplacement du couvercle 9 dans la position fermée de telle sorte que l'élément d'appui 14 vienne en appui contre l'aliment ;
- détermination automatique de l'écartement entre la plaque de cuisson 6 et l'élément d'appui 14 ou de la distance de déplacement parcourue par l'élément d'appui 14, et donc de l'épaisseur de l'aliment disposé alors entre la plaque de cuisson 6 et l'élément d'appui 14 ;
- activation automatique du début de cuisson de l'aliment par l'unité de contrôle 33 ;
- alerte de l'utilisateur, par l'unité de contrôle 33, de la nécessité de retourner l'aliment ;
- réduction éventuelle de la puissance de cuisson par l'unité de contrôle 33 jusqu'à ce que l'unité de contrôle 33 détecte l'ouverture du couvercle 9 par l'utilisateur, cette détection de l'ouverture du couvercle 9 pouvant être déterminée par le retour en position de repos de l'élément d'appui 14, puis rétablissement de la puissance de cuisson lorsque l'élément d'appui 14 est de nouveau déplacé dans une position d'appui ;
- alerte de l'utilisateur lorsque la cuisson de l'aliment est conforme à la cuisson demandée ;
- réduction éventuelle de la puissance cuisson par l'unité de contrôle 33 jusqu'à ce que l'unité de contrôle 33 détecte l'ouverture du couvercle 9.
- ouverture du couvercle 9 pour retirer l'aliment de la plaque de cuisson 6 ;
- mise hors tension de l'appareil de cuisson électrique 2 en sélectionnant la touche marche/arrêt ou en débranchant l'appareil de cuisson électrique 2.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, selon un mode de réalisation de l'invention non représenté sur les figures, l'élément d'actionnement 26 pourrait être monté pivotant autour d'un axe de pivotement, et le dispositif de mesure 25 pourrait comporter, à la place du dispositif de détection électromagnétique, un potentiomètre rotatif et être configuré pour mesurer un angle de pivotement de l'élément d'actionnement et pour déterminer la caractéristique représentative de l'épaisseur d'un aliment disposé entre la plaque de cuisson 6 et l'élément d'appui 14, à partir de l'angle de pivotement mesuré.

Selon un autre mode de réalisation de l'invention non représenté sur les figures, le potentiomètre rotatif pourrait être remplacé par un potentiomètre linéaire. A cet effet, l'élément d'appui pourrait comprendre une partie de coopération configuré pour coopérer avec le potentiomètre linéaire lorsque le couvercle 9 est déplacé vers la position fermée.

Selon un autre mode de réalisation de l'invention non représenté sur les figures, l'élément d'appui 14 est monté coulissant sur le couvercle 9 selon une direction de coulissement qui est sensiblement verticale lorsque le couvercle 9 occupe la position fermée et que l'embase 3 repose sur un support horizontal.

Selon un autre mode de réalisation de l'invention non représenté sur les figures, le dispositif de mesure pourrait être un dispositif de mesure optique (par exemple comportant une diode électroluminescente et un photodétecteur), ou pourrait comprendre un palpeur configuré pour coopérer avec l'élément d'appui et par exemple pour venir en butée contre une face inférieure de l'élément d'appui lorsque le couvercle est en position fermée.

Selon encore un autre mode de réalisation de l'invention non représenté sur les figures, l'appareil de cuisson électrique pourrait comporter une ou plusieurs enceintes de cuisson fermées, et chaque enceinte de cuisson fermée pourrait être équipée d'un ou plusieurs dispositifs de mesure. Ainsi, chaque enceinte pourra comprendre plusieurs éléments d'appui disposés en parallèle et suspendus à l'intérieur d'un même couvercle.

## Revendications

1. Appareil de cuisson électrique (2) pour la cuisson de produits alimentaires, comportant :
- une embase (3) comprenant une plaque de cuisson (6) configurée pour cuire un aliment,
- un couvercle (9) monté articulé sur l'embase (3) entre une position ouverte dans laquelle un aliment peut être disposé sur la plaque de cuisson (6) et une position fermée dans laquelle l'embase (3) et le couvercle (9) délimitent une enceinte de cuisson fermée (11),
- un élément d'appui (14) qui est porté par le couvercle (9) et qui est monté mobile par rapport au couvercle (9), l'élément d'appui (14) étant configuré pour occuper une position de repos dans laquelle, lorsque le couvercle occupe la position fermée, l'élément d'appui (14) est situé en regard et à proximité de la plaque de cuisson (6) et au moins une position d'appui dans laquelle, lorsque le couvercle occupe la position fermée, l'élément d'appui (14) est situé en regard et à distance de la plaque de cuisson (6) et prend appui sur un aliment placé sur la plaque de cuisson (6), **caractérisé en ce que** l'élément d'appui (14) est configuré pour venir en contact avec un aliment placé sur la plaque de cuisson (6) lorsque le couvercle (9) est déplacé de la position ouverte à une position intermédiaire située entre la position ouverte et la position fermée et étant configuré pour être déplacé par ledit aliment de la position de repos à une position d'appui lorsque le couvercle (9) est déplacé de la position intermédiaire à la position fermée, et
- un dispositif de mesure (25) configuré pour déterminer une caractéristique représentative de l'épaisseur d'un aliment disposé entre la plaque de cuisson (6) et l'élément d'appui (14).

2. Appareil de cuisson électrique (2) selon la revendication 1, lequel comprend en outre une unité de contrôle (33) configurée pour déterminer l'état de cuisson d'un aliment disposé sur la plaque de cuisson (6) en tenant compte, entre autres, de la caractéristique déterminée par le dispositif de mesure (25).

3. Appareil de cuisson électrique (2) selon la revendication 1 ou 2, dans lequel la caractéristique déterminée par le dispositif de mesure (25) est la distance de déplacement parcourue par l'élément d'appui (14) entre la position de repos et la position d'appui ou est l'écartement entre la plaque de cuisson (6) et l'élément d'appui (14).

4. Appareil de cuisson électrique (2) selon l'une quelconque des revendication 1 à 3, dans lequel l'élément d'appui (14) est une plaque d'appui.

5. Appareil de cuisson électrique (2) selon l'une quelconque des revendication 1 à 4, lequel comprend un dispositif de chauffage inférieur (7) prévu dans l'embase (3) et configuré pour chauffer la plaque de cuisson (6).

6. Appareil de cuisson électrique (2) selon l'une quelconque des revendications 1 à 5, lequel comporte un élément d'actionnement (26) qui est configuré pour coopérer avec le dispositif de mesure (25) et qui est mobile entre une première position d'actionnement et une deuxième position d'actionnement, l'élément d'actionnement (26) étant configuré pour occuper la première position d'actionnement lorsque l'élément d'appui (14) occupe la position de repos, l'appareil de cuisson électrique étant configuré de telle sorte qu'un déplacement de l'élément d'appui (14) entre la position de repos et une position d'appui entraîne un déplacement de l'élément d'actionnement (26) entre la première position d'actionnement et la deuxième position d'actionnement, le dispositif de mesure (25) étant configuré pour déterminer la caractéristique représentative de l'épaisseur d'un aliment disposé entre la plaque de cuisson (6) et l'élément d'appui (14) en fonction de la position occupée par l'élément d'actionnement (26) entre la première position d'actionnement et la deuxième position d'actionnement.

7. Appareil de cuisson électrique (2) selon la revendication 6, dans lequel l'élément d'actionnement (26) est disposé dans une partie avant de l'appareil de cuisson électrique, et/ou le dispositif de mesure (25) est disposé dans une partie avant de l'appareil de cuisson électrique.

8. Appareil de cuisson électrique (2) selon l'une quelconque des revendications 6 ou 7, dans lequel le dispositif de mesure (25) comporte un dispositif de détection électromagnétique.

9. Appareil de cuisson électrique (2) selon l'une quelconque des revendications 1 à 8, lequel comporte un dispositif de liaison (16) configuré pour relier l'élément d'appui (14) au couvercle (9), le dispositif de liaison (16) comportant une partie de fixation (17) qui est fixée au couvercle (9) et un organe de liaison (18) qui comprend une première portion de montage (18.1) qui est montée articulée sur la partie de fixation (17) autour d'un premier axe d'articulation (B1) et une deuxième portion de montage (18.2) qui est montée articulée sur l'élément d'appui (14) autour d'un deuxième axe d'articulation (B2) qui est sensiblement parallèle au premier axe d'articulation.

10. Appareil de cuisson électrique (2) selon la revendication 9 en combinaison avec la revendication 6, dans lequel l'élément d'actionnement (26) est fixé à l'organe de liaison (18).

11. Appareil de cuisson électrique (2) selon la revendication 9 ou 10, dans lequel le dispositif de liaison (16) et l'élément d'appui (14) définissent un quadrilatère déformable.

12. Appareil de cuisson électrique (2) selon la revendication 11, dans lequel le dispositif de liaison (16) comporte un organe de liaison additionnel (22) qui comprend une première portion de liaison (22.1) qui est montée articulée sur la partie de fixation (17) autour d'un troisième axe d'articulation (B 3) et une deuxième portion de liaison (22.2) qui est montée articulée sur l'élément d'appui (14) autour d'un quatrième axe d'articulation (B4) qui est sensiblement parallèle au premier axe d'articulation (B1) et au troisième axe d'articulation (B 3), l'organe de liaison (18), l'organe de liaison additionnel (22), l'élément d'appui (14) et la partie de fixation (17) définissant le quadrilatère déformable qui est articulé au niveau des premier, deuxième, troisième et quatrième axes d'articulation.

13. Appareil de cuisson électrique (2) selon l'une quelconque des revendications 1 à 12, lequel comporte un élément de sollicitation configuré pour solliciter l'élément d'appui (14) vers la position de repos.

## Patentansprüche

1. Elektrische Kocheinrichtung (2) für das Kochen von Lebensmittelprodukten, umfassend:
- einen Unterkasten (3), umfassend eine Kochplatte (6), die dazu konfiguriert ist, ein Lebensmittel zu kochen,
- einen Deckel (9), der gelenkig zwischen einer offenen Position, bei der ein Lebensmittel auf der Kochplatte (6) angeordnet werden kann, und einer geschlossenen Position, bei der der Unterkasten (3) und der Deckel (9) einen geschlossenen Kochraum (11) begrenzen, auf dem Unterkasten (3) montiert ist,
- ein Auflageelement (14), das von dem Deckel (9) getragen wird und das in Bezug auf den Deckel (9) beweglich montiert ist, wobei das Auflageelement (14) dazu konfiguriert ist, eine Ruheposition, bei der das Auflageelement (14) der Kochplatte (6) zugewandt und in der Nähe derselben gelegen ist, wenn der Deckel die geschlossene Position einnimmt, und mindestens eine Auflageposition einzunehmen, bei der das Auflageelement (14) der Kochplatte (6) zugewandt und von derselben beabstandet gelegen ist und auf einem Lebensmittel aufliegt, das auf der Kochplatte (6) platziert ist, wenn der Deckel die geschlossene Position einnimmt, **dadurch gekennzeichnet dass**, das Auflageelement (14) dazu konfiguriert ist, ein auf der Kochplatte (6) platziertes Lebensmittel zu berühren, wenn der Deckel (9) von der offenen Position in eine mittlere Position bewegt wird, die zwischen der offenen Position und der geschlossenen Position gelegen ist, und dazu konfiguriert ist, durch das Lebensmittel von der Ruheposition in eine Auflageposition bewegt zu werden, wenn der Deckel (9) von der mittleren Position in die geschlossene Position bewegt wird, und
- eine Messvorrichtung (25), die dazu konfiguriert ist, eine Eigenschaft zu ermitteln, die repräsentativ ist für die Dicke eines zwischen der Kochplatte (6) und dem Auflageelement (14) platzierten Lebensmittels.

2. Elektrische Kocheinrichtung (2) nach Anspruch 1, die weiter eine Steuereinheit (33) umfasst, die dazu konfiguriert ist, den Kochzustand eines auf der Kochplatte (6) platzierten Lebensmittels unter Berücksichtigung unter anderem der von der Messvorrichtung (25) ermittelten Eigenschaft zu ermitteln.

3. Elektrische Kocheinrichtung (2) nach Anspruch 1 oder Anspruch 2, wobei die von der Messvorrichtung (25) ermittelte Eigenschaft der von dem Auflageelement (14) zurückgelegte Weg zwischen der Ruheposition und der Auflageposition ist oder der Abstand zwischen der Kochplatte (6) und dem Auflageelement (14) ist.

4. Elektrische Kocheinrichtung (2) nach einem der Ansprüche 1 bis 3, wobei das Auflageelement (14) ein Auflageblech ist.

5. Elektrische Kocheinrichtung (2) nach einem der Ansprüche 1 bis 4, die eine untere Heizvorrichtung (7) umfasst, die im Unterkasten (3) vorgesehen ist und dazu konfiguriert ist, die Kochplatte (6) zu erhitzen.

6. Elektrische Kocheinrichtung (2) nach einem der Ansprüche 1 bis 5, die ein Betätigungselement (26) umfasst, das dazu konfiguriert ist, mit der Messvorrichtung (25) zusammenzuwirken und das zwischen einer ersten Betätigungsposition und einer zweiten Betätigungsposition beweglich ist, wobei das Betätigungselement (26) dazu konfiguriert ist, die erste Betätigungsposition einzunehmen, wenn das Auflageelement (14) die Ruheposition einnimmt, wobei die elektrische Kochvorrichtung derart konfiguriert ist, dass eine Bewegung des Auflageelements (14) zwischen der Ruheposition und der Auflageposition eine Bewegung des Betätigungselements (26) zwischen der ersten Betätigungsposition und der zweiten Betätigungsposition bewirkt, wobei die Messvorrichtung (25) dazu konfiguriert ist, die Eigenschaft, die für die Dicke eines zwischen der Kochplatte (6) und dem Auflageelement (14) angeordneten Lebensmittels repräsentativ ist, in Abhängigkeit von der zwischen der ersten Betätigungsposition und der zweiten Betätigungsposition eingenommenen Position des Betätigungselements (26) zu ermitteln.

7. Elektrische Kocheinrichtung (2) nach Anspruch 6, wobei das Betätigungselement (26) in einem vorderen Teil der elektrischen Kocheinrichtung angeordnet ist und/oder die Messvorrichtung (25) in einem vorderen Teil der elektrischen Kocheinrichtung angeordnet ist.

8. Elektrische Kocheinrichtung (2) nach einem der Ansprüche 6 oder 7, wobei die Messvorrichtung (25) eine elektromagnetische Erfassungsvorrichtung umfasst.

9. Elektrische Kocheinrichtung (2) nach einem der Ansprüche 1 bis 8, die eine Verbindungsvorrichtung (16) umfasst, die dazu konfiguriert ist, das Auflageelement (14) mit dem Deckel (9) zu verbinden, wobei die Verbindungsvorrichtung (16) einen Befestigungsteil (17), der am Deckel (9) befestigt ist, und ein Verbindungsorgan (18) umfasst, das einen ersten Montageabschnitt (18.1), der gelenkig am Befestigungsteil (17) um eine erste Gelenkachse (B1) herum montiert ist, und einen zweiten Montageabschnitt (18.2) umfasst, der auf dem Auflageelement (14) um eine zweite Gelenkachse (B2) herum montiert ist, die im Wesentlichen parallel zur ersten Gelenkachse ist.

10. Elektrische Kocheinrichtung (2) nach Anspruch 9 in Kombination mit Anspruch 6, wobei das Betätigungselement (26) am Verbindungsorgan (18) befestigt ist.

11. Elektrische Kocheinrichtung (2) nach Anspruch 9 oder 10, wobei die Verbindungsvorrichtung (16) und das Auflageelement (14) ein verformbares Viereck definieren.

12. Elektrische Kocheinrichtung (2) nach Anspruch 11, wobei die Verbindungsvorrichtung (16) ein zusätzliches Verbindungsorgan (22) umfasst, das einen ersten Verbindungsabschnitt (22.1), der gelenkig auf dem Befestigungsteil (17) um eine dritte Gelenkachse (B 3) herum montiert ist, und einen zweiten Verbindungsabschnitt (22.2) umfasst, der gelenkig auf dem Auflageelement (14) um eine vierte Gelenkachse (B4) herum montiert ist, die im Wesentlichen parallel zur ersten Gelenkachse (B1) und zur dritten Gelenkachse (B 3) ist, wobei das Verbindungsorgan (18), das zusätzliche Verbindungsorgan (22), das Auflageelement (14) und der Befestigungsteil (17) das verformbare Vierecke definieren, das an der ersten, zweiten, dritten und vierten Gelenkachse angelenkt ist.

13. Elektrische Kocheinrichtung (2) nach einem der Ansprüche 1 bis 12, das ein Vorspannelement umfasst, das dazu konfiguriert ist, das Auflageelement (14) zur Ruheposition hin vorzuspannen.

## Claims

1. Electrical cooking appliance (2) for cooking food products, comprising:
- a base (3) comprising a cooking plate (6) configured to cook a food,
- a cover (9) mounted hinged on the base (3) between an open position wherein a food can be disposed on the cooking plate (6) and a closed position wherein the base (3) and the cover (9) delimit a closed cooking chamber (11),
- a support element (14) which is carried by the cover (9) and which is mounted mobile with respect to the cover (9), the support element (14) being configured to occupy a rest position wherein, when the cover occupies the closed position, the support element (14) is located facing and in the proximity of the cooking plate (6) and at least one support position wherein, when the cover occupies the closed position, the support element (14) is located facing and at a distance from the cooking plate (6) and bears on a food placed on the cooking plate (6), **characterized in that** the support element (14) is configured to come into contact with a food placed on the cooking plate (6) when the cover (9) is moved from the open position to an intermediate position located between the open position and the closed position and being configured to be moved by said food from the rest position to a support position when the cover (9) is moved from the intermediate position to the closed position, and
- a measuring device (25) configured to determine a feature representative of the thickness of a food disposed between the cooking plate (6) and the support element (14).

2. Electrical cooking appliance (2) according to claim 1, which further comprises a control unit (33) configured to determine the cooking state of a food disposed on the cooking plate (6) by considering, among others, the feature determined by the measuring device (25).

3. Electrical cooking appliance (2) according to claim 1 or 2, wherein the feature determined by the measuring device (25) is the movement distance travelled by the support element (14) between the rest position and the support position or is the gap between the cooking plate (6) and the support element (14).

4. Electrical cooking appliance (2) according to any one of claims 1 to 3, wherein the support element (14) is a support plate.

5. Electrical cooking appliance (2) according to any one of claims 1 to 4, which comprises a lower heating device (7) provided in the base (3) and configured to heat the cooking plate (6).

6. Electrical cooking appliance (2) according to any one of claims 1 to 5, which comprises an actuation element (26) which is configured to engage with the measuring device (25) and which is mobile between a first actuation position and a second actuation position, the actuation element (26) being configured to occupy the first actuation position when the support element (14) occupies the rest position, the electrical cooking appliance being configured such that a movement of the support element (14) between the rest position and a support position leads to a movement of the actuation element (26) between the first actuation position and the second actuation position, the measuring device (25) being configured to determine the feature representative of the thickness of a food disposed between the cooking plate (6) and the support element (14) according to the position occupied by the actuation element (26) between the first actuation position and the second actuation position.

7. Electrical cooking appliance (2) according to claim 6, wherein the actuation element (26) is disposed in a front part of the electrical cooking appliance, and/or the measuring device (25) is disposed in a front part of the electrical cooking appliance.

8. Electrical cooking appliance (2) according to any one of claims 6 or 7, wherein the measuring device (25) comprises an electromagnetic detection device.

9. Electrical cooking appliance (2) according to any one of claims 1 to 8, which comprises a connecting device (16) configured to connect the support element (14) to the cover (9), the connecting device (16) comprising a fixing part (17) which is fixed to the cover (9) and a connecting member (18) which comprises a first mounting portion (18.1) which is mounted hinged on the fixing part (17) about a first hinge axis (B1) and a second mounting portion (18.2) which is mounted hinged on the support element (14) about a second hinge axis (B2) which is substantially parallel to the first hinge axis.

10. Electrical cooking appliance (2) according to claim 9 combined with claim 6, wherein the actuation element (26) is fixed to the connecting member (18).

11. Electrical cooking appliance (2) according to claim 9 or 10, wherein the connecting device (16) and the support element (14) define a deformable quadrilateral.

12. Electrical cooking appliance (2) according to claim 11, wherein the connecting device (16) comprises an additional connecting member (22) which comprises a first connecting portion (22.1) which is mounted hinged on the fixing part (17) about a third hinge axis (B3) and a second connecting portion (22.2) which is mounted hinged on the support element (14) about a fourth hinge axis (B4) which is substantially parallel to the first hinge axis (B1) and to the third hinge axis (B3), the connecting member (18), the additional connecting member (22), the support element (14) and the fixing part (17) defining the deformable quadrilateral which is hinged to the first, second, third and fourth hinge axes.

13. Electrical cooking appliance (2) according to any one of claims 1 to 12, which comprises an urging element configured to urge the support element (14) to the rest position.
